# EUROPEAN PATENT APPLICATION

(11) **EP 3 549 439 A1**
(43) Date of publication of application: **09.10.2019**
(21) Application number: 17878123.3
(22) Date of filing: 03.12.2017
(51) Int. Cl.: A01K 85/01

(54) **MODULAR FISHING LURE DEVICE**

(30) Priority: 05.12.2016 CO 16005004
(71) Applicant: Pontificia Universidad Javeriana, Bogota 110231 (CO)
(72) Inventor: AGUILAR, Jaime, Cali 760031 (CO); LÓPEZ YEPES, David, Cali 760031 (CO)
(74) Representative: Monzón de la Flor, Luis Miguel
(86) International application number: PCT/IB2017/057597
(87) International publication number: WO 2018/104837

(57) **Abstract**

The present invention provides a modular device fishing lure having a main body with a cavity and a screw thread, coupled to a cover with a screw thread. The cavity inside the device contains a vibrator and a receptacle for various elements and the cover comprises a fin. A seal is optionally arranged between the main body and the cover, an extension piece makes it possible to modify the length of the device, and the device can be hinged.

## Description

### TECHNICAL FlELD

The present invention relates to the mechanical engineering field; more specifically it refers to an artificial modular fishing lure with features that can be modified or added such as sound and/or vibratory waves emission or alike, its either solid or articulated body and adjustable length.

### AIM OF THE INVENTION

The aim of the current invention is to provide a device for fishing different fish species in different depths. Current devices have flaws like the lack of control and stiffness of the system, which does not allow further modifications such as autonomous movement, sound emission, length and depth variation, that would make a more versatile device.

### BACKGROUND OF THE INVENTION

Fishing is a sport and a hobby widely practiced worldwide, in some coastal regions around the world it constitutes a lifestyle and a livelihood for families; the U.S. Fish and Wildlife Service estimates that 14% of the population practices fishing. Fishing has been a stigmatized practice due to the lack of both technical and target fishes knowledge, among other reasons because it is a common belief that fishing is a sport where getting to success depends mainly on luck. This is because of the shortage of control the fisherman can have and the rudimentary fishing equipment used, triggering a feeling of uncertainty that people end up interpreting as luck.

The identified technical problem in fishing practices with artificial fishing lures is the lack of flexibility and adaptability of fishing lures to the different environments and varieties of fish species, which require distinct characteristics gathered on the same product. Since there is not such tool, the fisherman must purchase different types of fishing lures with determined specifications for each environment, for example, for some kind of fishes that feed on the surface it is required a fishing lure that stays close to it, but for some other kind of fishes that reside in greater depths, it is needed a fishing lure that can reach down there.

Current available products in the market do not allow the lure to adapt to different environments, since these products have predetermined characteristics which cannot be modified. The problem of the products and the device rigidity is reflected on the impossibility of catching different fish species, because they feed in different ways and in different depths. Current products can only be used in established depths with short-range variations; therefore, they prevent to capture fishes of different environments.

The fishing lure movement is caused by the movement of water passing through the outline of it, by the movement of the fisherman, by the watercourses, or the boat's movement in which the fisherman is. But the kind of movement that acts directly on the lure is defined by the element geometry of its front surface. These wave movements are presented with variations as indicated.

Fishing lures movements are oscillatory with a ripple behavior, where the wave length and wave amplitude change according to the geometric shape of the front surface of the fishing lure. The surfaces allow the creation of movement patterns that fishes find attractive, fishing lures with elongated shapes and rounded surfaces has wave movements with longer amplitudes and lengths, while fishing lures with rounded and shorter surface generate ripple movements with shorter length and amplitudes. However, some fishing lures cyclically present an irregular movement in one of the crest or wave valleys which increase the amplitude twice. There are different atypical movements that keep the ripple movement but on the crests and wave valleys it happens an interruption or an abrupt movement generated by the surface rectangular shape. This particular shape causes this characteristic movement which is reflected as a flap of a small fish in trouble.

US 7,716,871 patent reveals a fishing lure for spraying water droplets forward and aft of the fishing lure. The fishing lure has a monolithic body extended along an axis from the end of the head to the end of the tail of the fishing lure body. A first substantially flat surface is formed at the end of the head of the fishing lure body such that the first substantially flat surface forms a first angle relative to the axis. A second substantially flat surface is formed at the end of the head of the fishing lure body so that the second surface substantially flat forms a second angle relative to the axis. A third angle is formed with respect to the first and second substantially flat surfaces such that the third angle is the sum of the first angle and the second angle. The reinforcement is defined by the intersection of the first and the second substantially flat surface. The reinforcement extends through and substantially transverse to the axis, the reinforcement and the shaft cooperate to define a plane that defines fishing lure body in an upper portion and an adjacent lower portion to the first substantially flat surface and the second substantially flat surface, respectively. An eyelet hook loop to fix in a pivoting way a fishing hook to it, which is connected to a central portion of the fishing lure lower portion, and a an eyelet loop line is connected to the end of the head of the fishing lure body.

US 3,352,052 patent discloses a fishing lure comprising a body with a funnel shaped head section and an elongated blade section extending rearwardly from the body to terminate in a tail, the surface areas of the section head section and the blade section are substantially the same and the wide end of the head section to the nose of the lure, and where the funnel is open along one side coming into the funnel to pass through the funnel and spill along the throat and the open side by the pressure strength on the funnel to oscillate the backside of the bait and backwards with a swinging like motion that extends through an arc of about 180º.

US 2933987 patent shows an artificial lure with a body weight placed in a cavity of the body and a concave face tilted towards the front end which cooperate to give action when is pulled through water; to provide a fishing lure specially designed as a deep running lure; to provide such an artificial fishing lure which has an outer shape which when is pulled through a water body it will remain substantially free from weeds and another plant growth; to provide such an artificial lure that is extremely resistant, long lasting, and damage resistant; to provide a fishing lure just as it is designed and built to have buoyancy and weight distribution for the action variation when it is accurately pulled at a different rhythm; to provide such a lure in which the hook shaft connection, the weight and hook arrangement positively retains the hook in fixed relationship; and to provide such an artificial fishing lure which is sparing to manufacture and easily maintained.

The patents presented above do not solve the problem matter described before, regarding the modularity of the fishing lure model, and do not have mechanisms for depth adjustment, neither vibration elements in order to produce waves and drawing fish attention, not even device length adjustment for adaptation to different fish sizes in fishing activities.

### DESCRIPTION OF THE INVENTION

The present invention relates to a modular fishing lure which enables to modify its characteristics in order to adapt it to different environments. Variations such as water depth, sound wave emission, length adjustment, rigid body or articulated body and appearance change.

The prototype design allows the user to modify the fishing lure characteristics according to the field and fishing zones like rivers, lakes, and seas which have different types of fishes that can be captured, which gives an advantage over existing devices due to the adaptability or modifiability limitations according to the user needs.

The system introduces structural changes that benefit the product and prototype design, as it is seen in a compartment or cavity implementation which is accessible to change and to modify the fishing lure features.

This compartment has been designed to allow the system to be modular and adaptable, this design interconnects design strategies such as length adjustment, movement or vibration, sound emission or design variants combinations.

The buoyancy mode will be maneuvered by means of steel balls, a metal tube or elements receptacle for which can contain spheres in the middle of the tube, that produces a metal bump, creating different sounds able to draw fishes' attention. When inserting steel spheres into the device comprised by the tube, it produces different tones of sound, allowing the change of sound waves emitted.

For wave generation, it is used a device with an electric motor preferably, which consists in a plurality of magnets generating a magnetic field and a copper winding through which an electric current passes producing a rotary movement around an axial shaft that develops vibration through an eccentric mass, which can be inserted into the cavity, producing waves and movements when it is in water.

Length adjustment of the device is performed by connecting a piece which can be rigid or articulated, these parts allow the fishing lure to increase its length, and thus attracting larger fishes. The fishing lure device with articulated connection allows greater movements which attracts movement sensitive fishes.

### DETAILED DESCRIPTION OF THE INVENTION

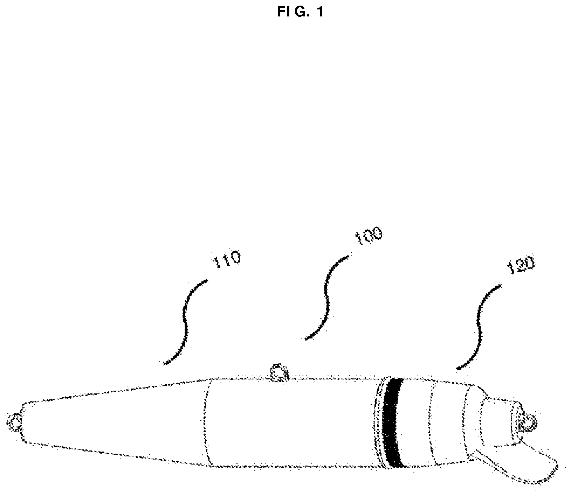

Figure 1 shows a first embodiment of the fishing lure (100) with the body (110) connected to the lid (120).

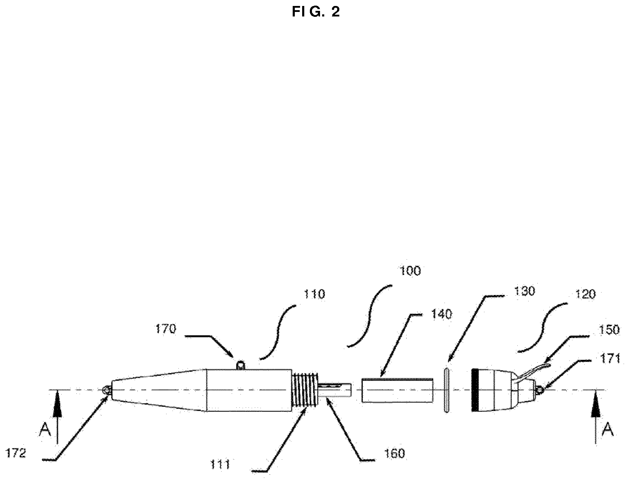

Figure 2 illustrates the fishing lure device (100) with the main body (110) which comprises a cavity (112) and a closed end (113), the body (110) has a fastener mechanism, threaded preferably (111) in some embodiments external, (in other embodiments an internal thread), which engages the fastener mechanism means, preferably threaded (121) of the lid (120). The lid (120) has a fin (150) that generates a modifier effect on the ripple movement pattern of the fishing lure when it is operating. At the moment of coupling the lid(120) to the body (110) there is a middle seal (130) in other to give air tightness to the device (100). The device (100) comprises a plurality of guide rings (170) (171) (172) for coupling hooks or fishing lines to secure and pull the fishing lure.

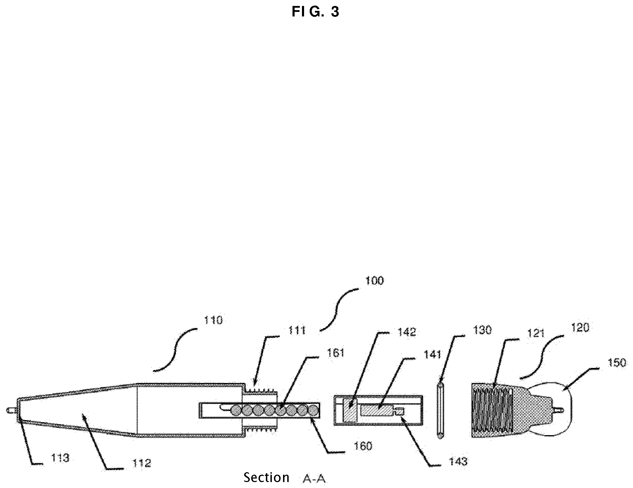

Figure 3 shows the fishing lure device (100) with the body (110) which comprises a cavity (112) with a closed end (113), the main body (110) has a fastener mechanism, preferably threaded (111) which couples to the fastener mechanism, ideally threaded (121) of the lid (120), the lid (120) comprises a fin (150). The cavity (112) formed inside the device (100) includes a receptacle (160) that comprises spheres (161) and a vibrating device (140) such that includes a motor ideally (141) with an eccentrical mass (143) connected to a battery (142).

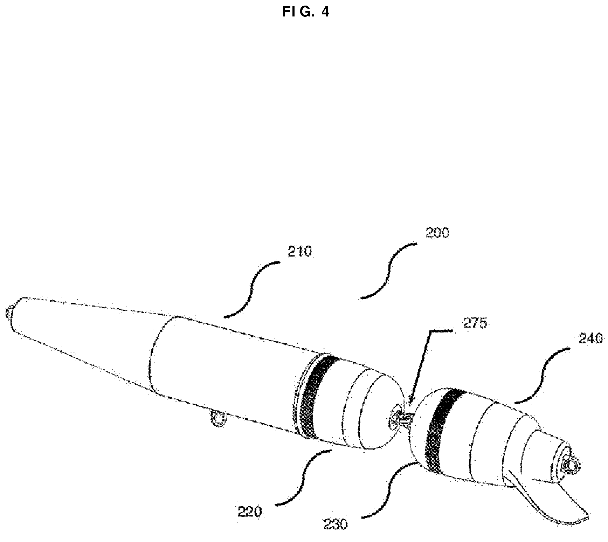

Figure 4 displays a second embodiment of the invention which is a fishing lure device (200) with a main body (210) attached to the lid (220) which is coupled to a lid (230) and to an adjunct body (240), through a hinged or articulated connection (275), preferably and for this figure's examples it is made by means of interlocking rings. This second embodiment of the invention evidences the modularity function of the fishing lure, which enables parts swapping, turning the fishing lure device as described in the first embodiment into the fishing lure device of the second embodiment. The link connection or articled connection (275) increases the movement allowed, which attracts movement sensitive fishes.

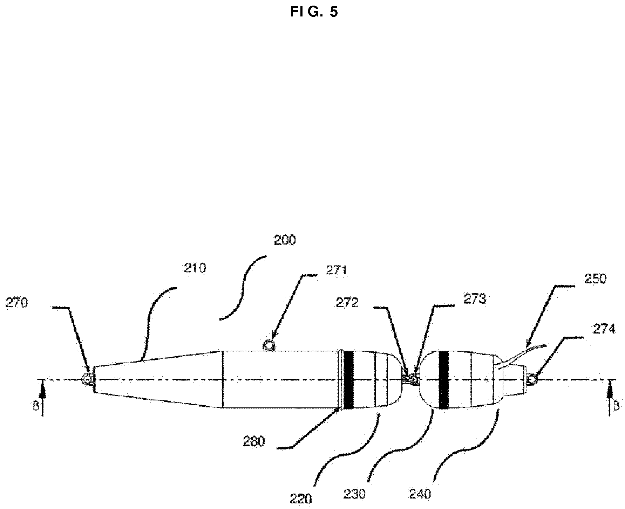

Figure 5 illustrates the fishing lure device (200) comprising a main body (210), the main body (210) couples to the lid (220), in between the main body (210) and the lid (220) there is a seal (280), it also comprises an adjunct body (240) coupled to a lid (230) by means of fastener elements, preferably threated (231) and (241), the lid (220) and the lid (230) are linked by means of anchoring mechanisms, like rings optionally, as depicted in the figure as guide rings (272) and (273), the adjunct body (240) has a fin (250). The device (200) comprises guide rings (270), (271) and (274) for engaging hooks or fishing lines to secure and pulling the bait.

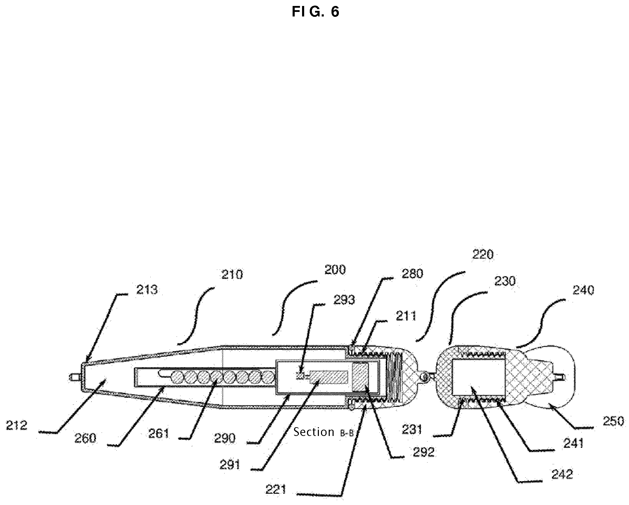

Figure 6 shows the fishing lure (200) comprising a main body (210) which comprises a cavity (212) a means for fastening, in the present embodiment threaded (211), which is coupled to a lid (220) that has thread (221), the cavity (212) formed inside the device (200) includes a receptacle of a vibrating device (290) which preferably comprises a vibration motor (291) with an eccentrical mass (293) connected to a battery (292) and an elements receptacle (260) which comprises spheres (261); between the main body (210) and the lid (220) there is a seal (280) it also has an adjunct body (240) connected to a lid (230) by threads (231) (241), the adjunct body (240) has a fin (250) that produces a modifying effect on the undulatory movement pattern of the fishing lure when it is operating.

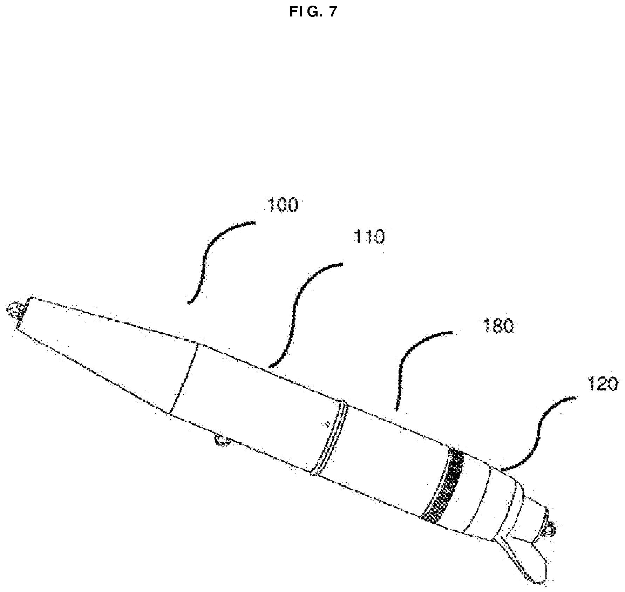

Figure 7 depicts a third embodiment of the fishing lure device (100) which includes a third extension piece (180) that is fastened to the main body (110) and the lid (120). This third embodiment of the invention displays the modularity function of the fishing lure device, which enables the device transformation described in the first embodiment or the second one in the third embodiment by swapping parts. The length adjustment is done by connecting the extension piece (180) which may be solid or articulated, these parts allow the fishing lure to be longer and capable of attracting larger fishes.

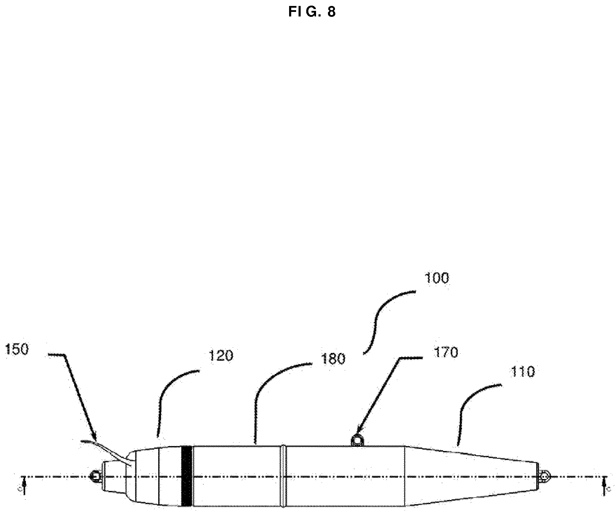

Figure 8 shows a side view of the third embodiment of the device (100), which shows the fin (150) connected to the lid(120), attached to the extension piece (180), this one is hollow piece i.e. a through hole piece that may be threaded at their ends, and the extension piece (180) is coupled to the main body (110).

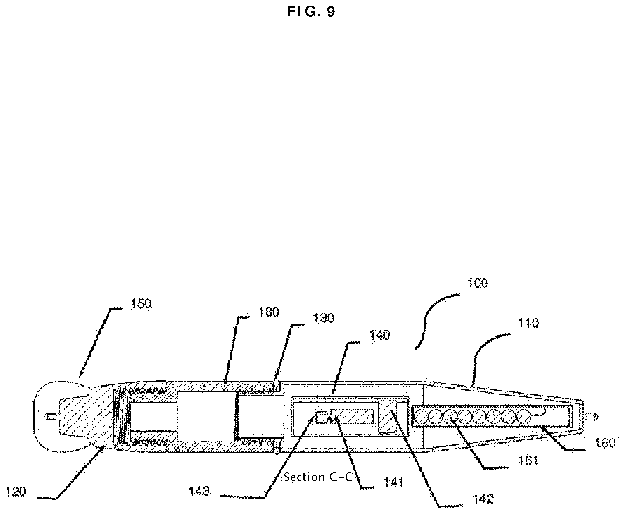

Figure 9 illustrates the fishing lure device (100) which comprises a main body (110), the main body (110) has a fastener mechanism, preferably threated, where the fastener mechanism is coupling the extension piece (180) at the opposite end of the extension piece (180) is coupled the lid (120) by means of a threaded preferably, the cap (120) that comprises a fin (150). The cavity formed inside the device (100) includes an elements receptacle (160) which includes spheres (161) and a vibrating device (140), in this embodiment of the invention the vibrating device (140) includes preferably a motor (141) with a eccentrical mass (143) and vibrating device (140) connected to a battery (142).

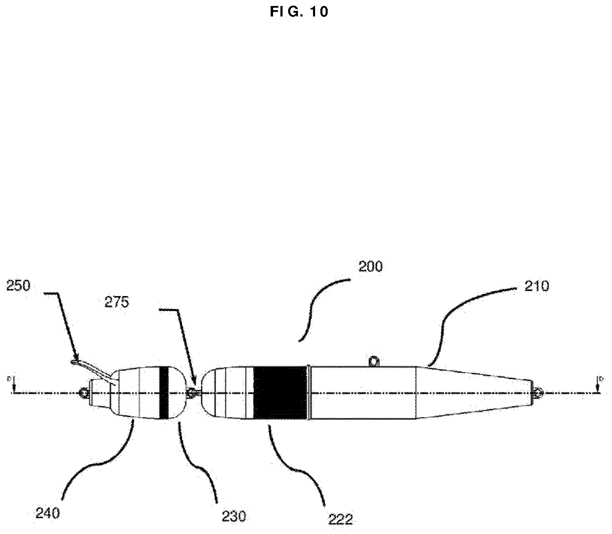

Figure 10 depicts the modular fishing lure (200) which comprises a main body (210), the main body (210) couples to the lid (222), this lid (222) has the same conformation as the lid (220) detailed in Figure 5, however the body of this lid is an extended body that is longer, which its purpose is catching bigger fishes when this lid (222) is used on the device (200), between the main body (210) and the lid (222) there is an optional seal, also comprises an adjunct body (240) coupled to the lid (230) through clamping or fastener elements, preferably threated; the lid (222) and cap (230) are linked by an articled connection (275), the adjunct body (240) has a fin (250). The modular fishing lure (200) counts with rings used for coupling hooks or fishing lines to secure and pull the bait.

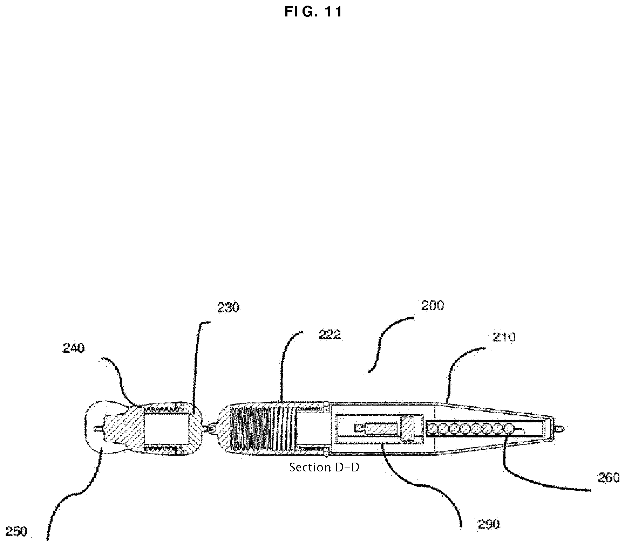

Figure 11 presents the section D-D of the side view of Figure 10, the modular fishing lure device (200) comprising a main body (210) with a cavity and a fastener or clamping means for this instance is threaded, which is coupled to a lid (222) that is threaded, in the cavity formed inside the device (200) includes a vibrating device (290) which is preferably a motor with an eccentrical mass and is connected to a battery, and comprising an elements receptacle (260) that includes spheres; in the middle of the main body (210) and the lid (220) there is an optional seal: additionally it comprises an adjunct body (240) linked to a lid (230) preferably by threads; the adjunct body (240) comprises a fin (250) that produces a modifying effect on the undulatory motion pattern of the fishing lure when it is operating .

The preferred material for the device (100) (200) is polymeric, which includes thermoplastic and thermostable ones, more specifically materials such as resins, polyethylene HDPE, LDPE, PVC, PET, Polypropylene.

The foregoing description should be taken only as a reference and not as restrictive in its components neither its explicit relation, but it has been described to provide a clear idea on the overall subject conformation matter of the claimed invention.

### BRIEF DESCRIPTION OF THE DRAWINGS

As a complementary description and with the aim of providing a better understanding of the invention technical characteristics, are attached hereto the following Figures set:
Figure 1. Isometric view of the fishing lure device.
Figure 2. Side view of fishing lure device.
Figure 3. Section view of the cut A-A of the fishing lure device side view.
Figure 4. Isometric view of the modular fishing lure device with the adjunct body.
Figure 5. Side view of the modular lure fishing device and its adjunct body.
Figure 6. Section view B-B of the side view of the modular fishing lure device and the adjunct body.
Figure 7. Isometric view of the modular fishing lure device with the extension piece.
Figure 8. Side view of the modular fishing lure device with the extension piece.
Figure 9. Section view C-C of the side view of the modular fishing lure device with the extension piece.
Figure 10. Side view of the modular lure fishing device and its adjunct body with extended lid.
Figure 11. Section view D-D modular fishing lure device and adjunct body with extended lid.

### LIST OF REFERENCES

- 100: Modular fishing lure device
- 110: Main body
- 111: Thread
- 112: Cavity
- 113: Closed end
- 120: Lid
- 121: Thread
- 130: Seal
- 140: Vibrating device
- 141: Vibration motor
- 142: Battery
- 143: Eccentrical mass
- 150: Fin
- 160: Elements receptacle
- 161: Spheres
- 170: Guide rings
- 171: Guide rings
- 172: Guide rings
- 180: Extension piece
- 200: Modular articulated fishing lure device
- 210: Main body
- 211: Thread
- 212: Cavity
- 213: Closed end
- 220: Lid
- 221: Thread
- 222: Elongated lid
- 230: Lid
- 231: Thread
- 240: Adjunct body
- 241: Thread
- 242: Cavity
- 250: Fin
- 260: Elements receptacle
- 261: Spheres
- 270: Guide rings
- 271: Guide rings
- 272: Guide rings
- 273: Guide rings
- 274: Guide rings
- 275: Articulated connection
- 280: Seal
- 290: Vibrating device
- 291: Vibration motor
- 292: Battery
- 293: Eccentrical mass

## Claims

1. A modular fishing lure device (100) comprising a main body (110), with a cavity (112) and a thread (111) which is coupled to a lid (120) that has a thread (121); the cavity (112) formed inside the device (100) comprises a vibrating device (140) and an elements receptacle (160); the lid (120) has a fin (150) in the middle of the main body (110) and the lid (120).

2. The modular fishing lure device according to claim 1 wherein the receptacle of the vibrating device (140) comprises a motor (141) with an eccentrical mass (143) connected to a battery (142).

3. The modular fishing lure device according to claim 1 wherein the elements receptacle (160) comprises a plurality of spheres (161).

4. The modular fishing lure device according to claim 1 wherein the device (100) comprises guide rings (170), (171), (172) fixed to the device (100).

5. A modular fishing lure device (200) comprising a main body (210) with a cavity (212) and a thread (211), which is coupled to a lid (220) that comprises a thread (221), the cavity (212) formed inside the device (200) comprises a vibration device (290) and an elements receptacle (260); it also comprises an adjunct body (240) coupled to the lid (230) by means of threads (231)(241), the lid (220) and the lid (230) are coupled through an articulated connection (275), and the adjunct body (240) comprises a fin (250).

6. The modular fishing lure device according to claim 5 wherein the vibrating device (290) comprises a motor (291) with an eccentrical mass (293) connected to a battery (292).

7. The modular fishing lure device according to claim 5 wherein the elements receptacle (260) comprises a plurality of spheres (261).

8. The modular fishing lure device according to claim 5 wherein the device (200) comprises guide rings (270), (271), (272), (273), (274) fixed to the device (200).

9. The modular fishing lure device according to claim 5 wherein the device comprises an elongated lid (222).

10. A modular fishing lure device (100) comprising a main body (110), the main body (110) comprises a fastener mechanism, threated preferably, which couples to the extension piece (180), at the opposite end of the extension piece (180) it is coupled to the lid (120) by a thread, the lid (120) comprises a fin (150); the cavity formed inside of the device (100) comprises an elements receptacle (160), which comprises spheres (161) and a vibration device (140).

11. The modular fishing lure device according to claim 10 wherein the vibrating device (140) comprises a motor (141) with an eccentrical mass (143) connected to a battery (142).
